(19)

Europäisches
Patentamt
European
Patent Office
Office européen
des brevets

(11) **EP 4 645 166 A1**

(12) **EUROPEAN PATENT APPLICATION**

(43) Date of publication:
**05.11.2025 Bulletin 2025/45**

(21) Application number: **25166074.2**

(22) Date of filing: **25.03.2025**

(51) International Patent Classification (IPC):
***G06N 3/045*** *(2023.01)*

(52) Cooperative Patent Classification (CPC):
**G06N 3/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.05.2024 IN 202421035382**

(71) Applicant: **Tata Consultancy Services Limited
Maharashtra (IN)**

(72) Inventors:
• **BANERJEE, Snehasis
700091 Kolkata, West Bengal (IN)**
• **BHOWMICK, Brojeshwar
700091 Kolkata, West Bengal (IN)**

• **ARORA, Raghav
500032 Hyderabad (IN)**
• **DATTA, Ahana
500032 Hyderabad (IN)**
• **SINGH, Shivam
500032 Hyderabad (IN)**
• **SWAMINATHAN, Karthik
500032 Hyderabad (IN)**
• **KRISHNA, Madhava
500032 Hyderabad (IN)**
• **SRIDHARAN, Mohan
Edinburgh, EH8 9YL (GB)**
• **JATAVALLABHULA, Krishna Murthy
Cambridge, 02139 (US)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR TASK ANTICIPATION BY INTEGRATING LARGE LANGUAGE MODELS AND CLASSICAL PLANNING**

(57)    The present invention generally relates to the field of robotics, and, more particularly, to a method and system for task anticipation by integrating large language models and classical planning. Conventional methods for task anticipating use data-driven deep network architectures and Large Language Models (LLMs) for task estimation but they do so at the level of high-level tasks and require a large number of training examples. Thus, embodiments of present disclosure provide a method and system for task anticipation by integrating large language models and classical planning. The disclosed method and system leverages the generic knowledge of LLMs through a small number of prompts to perform high-level task anticipation, using the anticipated tasks as joint goals in a classical planning system to compute a sequence of finer granularity actions that jointly achieve these goals.

FIG. 2

**Description**

CROSS-REFERENCE TO RELATED APPLICATIONS AND PRIORITY

The present application claims priority to Indian application no. 202421035382, filed on May 3, 2024.

TECHNICAL FIELD

The present invention generally relates to the field of robotics, and, more particularly, to a method and system for task anticipation by integrating large language models and classical planning.

BACKGROUND

Robotic agents can be deployed in environments such as a household to perform tasks such as making the bed, preparing coffee, or cooking breakfast, with each task requiring the agent to compute and execute a sequence of finer-granularity actions, e.g., it has to fetch the relevant ingredients to cook breakfast. Since the list of tasks can change based on the human's schedule or resource constraints, the agent is usually asked to complete one task at a time. However, the agent can be more efficient if, similar to a human, it can anticipate and prepare for upcoming tasks while computing a plan of finer granularity actions, e.g., it can plan to fetch the ingredients for breakfast when it fetches milk to make coffee. State-of-the-art methods for estimating future tasks or their costs formulate them as learning problems and use different data-driven deep network architectures. There has also been a lot of work on using Large Language Models (LLMs) for task planning. LLMs such as GPT-4 (Generative Pre-trained Transformer), PaLM (Pathways Language Model), and Llama (Large Language Model Meta AI) are being used to address different problems in robotics and AI including generate plans to achieve goals in different domains with minimal human intervention, motivated by the belief that they have condensed the commonsense knowledge encoded in descriptions of such plans extracted from different sources. Some methods have proposed prompting strategies to validate and improve previously generated plans, whereas other methods have demonstrated that the LLM-based summarization can be used for perception and scene understanding, and to generate code for planning and robot manipulation.

Given the rich literature on classical planning methods which use PDDL (Planning Domain Definition Language) to encode prior knowledge for planning in different domains, recent prior arts have emphasized the need for such planning in combination with LLMs for tasks in complex domains. LLMs have been used to generate (or translate prior knowledge to) goal states to be achieved by a classical (PDDL-based) planner. However, research has also indicated that methods based on deep networks and LLMs are not well-suited for multistep, multilevel decision-making (in the classical sense) by reasoning with domain knowledge. Although knowledge-based and data-driven methods have been developed for task anticipation, state-of-the-art methods primarily use deep network architectures and LLMs. They predict high-level tasks or the cost of the next high-level task in simplistic domains, with additional planning required to complete each such task, or require a large number of examples to predict finer-granularity actions to be executed. They also make it difficult to leverage domain knowledge, adapt to environmental changes, or to understand the decisions made. Some of the prior arts train deep neural networks to predict sequence of tasks by using demonstration videos of the tasks performed by humans. These methods require demonstration videos of each and every task to train the deep learning models for task anticipation. Further, the training involves complex computations which require extensively long periods of training time and large amount of processing power.

SUMMARY

Embodiments of the present disclosure present technological improvements as solutions to one or more of the above-mentioned technical problems recognized by the inventors in conventional systems. For example, in one embodiment, a method and system for task anticipation by integrating large language models and classical planning is provided. The method includes obtaining i) a natural language query comprising one or more tasks to be executed by a robotic agent in an environment, ii) a domain description in a Planning Domain Definition Language (PDDL) format, and iii) a current state of the robotic agent. Further, the method includes generating a standardized prompt from the natural language query based on the domain description and the current state of the robotic agent and inputting the standardized prompt into a plurality of pre-trained Large Language Models (LLMs) to predict a plurality of lists of anticipated tasks. The method further includes clustering the plurality of lists of anticipated tasks to obtain a plurality of clusters of anticipated tasks and selecting a cluster among the plurality of clusters. One or more anticipated tasks in the selected cluster constitute a final list of anticipated tasks. Further, the method includes converting the final list of anticipated tasks to a problem description in the PDDL format by using the plurality of pre-trained LLMs and generating, via a task planner, a plan for executing the final list of anticipated tasks based on the problem description. The generated plan minimizes execution cost of the robotic agent. Furthermore, the method includes executing the generated plan by the robotic agent. The current state of the robotic agent is updated after completing execution of each task in the final list of anticipated tasks.

In another aspect, a system for task anticipation by integrating large language models and classical planning is provided. The system includes: a memory storing instructions; one or more communication interfaces; and one or more hardware processors coupled to the memory via the one or more communication interfaces, wherein the one or more hardware processors are configured by the instructions to: obtain i) a natural language query comprising one or more tasks to be executed by a robotic agent in an environment, ii) a domain description in a Planning Domain Definition Language (PDDL) format, and iii) a current state of the robotic agent. Further, the one or more hardware processors are configured by the instructions to generate a standardized prompt from the natural language query based on the domain description and the current state of the robotic agent and inputting the standardized prompt into a plurality of pre-trained Large Language Models (LLMs) to predict a plurality of lists of anticipated tasks. The one or more hardware processors are further configured by the instructions to cluster the plurality of lists of anticipated tasks to obtain a plurality of clusters of anticipated tasks and select a cluster among the plurality of clusters. One or more anticipated tasks in the selected cluster constitute a final list of anticipated tasks. Further, the one or more hardware processors are configured by the instructions to convert the final list of anticipated tasks to a problem description in the PDDL format by using the plurality of pre-trained LLMs and generate, via a task planner, a plan for executing the final list of anticipated tasks based on the problem description. The generated plan minimizes execution cost of the robotic agent. Furthermore, the one or more hardware processors are configured by the instructions to execute the generated plan by the robotic agent. The current state of the robotic agent is updated after completing execution of each task in the final list of anticipated tasks.

In yet another aspect, there are provided one or more non-transitory machine-readable information storage mediums comprising one or more instructions which when executed by one or more hardware processors cause a method for task anticipation by integrating large language models and classical planning. The method includes obtaining i) a natural language query comprising one or more tasks to be executed by a robotic agent in an environment, ii) a domain description in a Planning Domain Definition Language (PDDL) format, and iii) a current state of the robotic agent. Further, the method includes generating a standardized prompt from the natural language query based on the domain description and the current state of the robotic agent and inputting the standardized prompt into a plurality of pre-trained Large Language Models (LLMs) to predict a plurality of lists of anticipated tasks. The method further includes clustering the plurality of lists of anticipated tasks to obtain a plurality of clusters of anticipated tasks and selecting a cluster among the plurality of clusters. One or more anticipated tasks in the selected cluster constitute a final list of anticipated tasks. Further, the method includes converting the final list of anticipated tasks to a problem description in the PDDL format by using the plurality of pre-trained LLMs and generating, via a task planner, a plan for executing the final list of anticipated tasks based on the problem description. The generated plan minimizes execution cost of the robotic agent. Furthermore, the method includes executing the generated plan by the robotic agent. The current state of the robotic agent is updated after completing execution of each task in the final list of anticipated tasks.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for task anticipation by integrating large language models and classical planning, according to some embodiments of the present disclosure.
FIG. 2 is a flow diagram illustrating a method for task anticipation by integrating large language models and classical planning, according to some embodiments of the present disclosure.
FIGS. 3A and 3B, collectively referred to as FIG.3, illustrate comparison of task execution without anticipation and with anticipation, respectively, according to some embodiments of the present disclosure.
FIG. 4 illustrates a first example scenario of replanning when an interruption is encountered by the robotic agent while executing a plan, according to some embodiments of the present disclosure.
FIG. 5 illustrates a second example scenario of replanning when an interruption is encountered by the robotic agent while executing a plan, according to some embodiments of the present disclosure.
FIG. 6 is a graph illustrating a comparison of number of anticipated tasks versus ratio of execution time and plan length, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

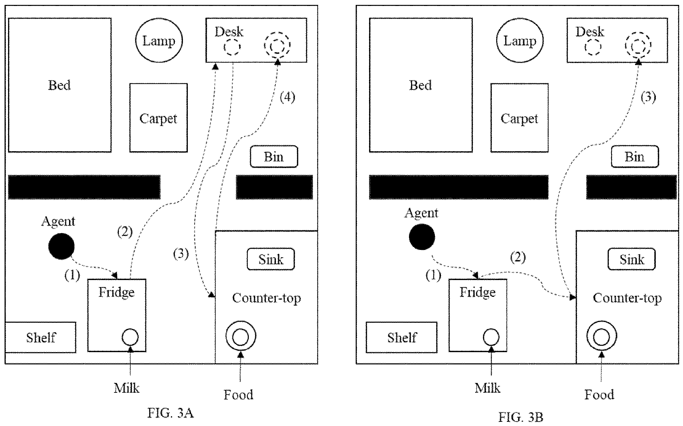

Consider an agent assisting humans with daily living tasks in a home environment. For example, in the scenario illustrated in FIG. 3, these tasks include making the bed, making coffee, and cooking breakfast, with each task requiring the agent to compute and execute a sequence of finer-granularity actions. Since the list of tasks can change based on the human's schedule or resource constraints, the agent is usually asked to complete one task at a time. However, the agent can be more efficient if, similar to a human, it can anticipate and prepare for upcoming tasks while computing a plan of finer granularity actions. In FIG. 3A, the robotic agent individually moves the milk and food to the desk showcasing an extra trip, whereas with task anticipation as in FIG. 3B, the robotic agent anticipates that the milk needs to be served after serving food and therefore moves both milk and food together to the desk, thus reducing an extra trip. State-of-the-art methods for estimating future tasks (alternatively referred as anticipated tasks) or their costs formulate them as learning problems and use different data-driven deep network architectures which require extensive training. There has also been a lot of work on using Large Language Models (LLMs) for task planning. However, these methods predict sequences of high-level tasks or require a large, labelled training dataset to compute a sequence of the associated fine-grained actions. They also make it difficult to leverage domain knowledge, adapt to environmental changes, or to understand the decisions made.

In order to overcome the above-mentioned drawbacks of conventional techniques, embodiments of present disclosure provide a method and system for task anticipation by integrating large language models and classical planning. User instruction is obtained as a natural language query comprising one or more tasks to be executed by a robotic agent (alternately referred as agent or robot) in an environment. In addition, a domain description in a Planning Domain Definition Language (PDDL) format, and a current state of the robotic agent are also obtained. The user instruction is converted to a standardized prompt by using the domain description and the current state of the robotic agent. The standardized prompt is then input to a plurality of pre-trained Large Language Models (LLMs) to predict a plurality of lists of anticipated tasks which are clustered into a plurality of clusters from which a final list of anticipated tasks are selected. Then, the final list of anticipated tasks are converted to a problem description in the PDDL format by using the plurality of pre-trained LLMs. Finally, a plan for executing the final list of anticipated tasks is generated based on the problem description such that execution cost is minimized and then the generated plan is executed by the robotic agent. If an interruption is encountered by the robotic agent while executing the generated plan, a new plan is generated using a set of anticipated tasks obtained by prompting the plurality of pre-trained LLMs with i) the domain description, ii) the current state of the robotic agent, and iii) a goal state of the robotic agent. The goal state is one among a plurality of goal states is associated with a) a goal to serve the interruption, b) a goal to resume the task which was stopped due to the interruption, and c) a goal to reuse one or more executed tasks among the final list of anticipated tasks. In an embodiment, the disclosed method and system can generate contextual and personalized list of anticipated tasks by obtaining an additional data comprising one or more of i) a contextual data and ii) a person specific data and utilizing the additional data to generate the standardized prompt to enable prediction of one or more lists of one or more contextual and personalized anticipation tasks by the plurality of LLMs. Thus, the embodiments of present disclosure leverages LLMs for proactive task anticipation, leading to improved autonomy, efficiency, and user experience.

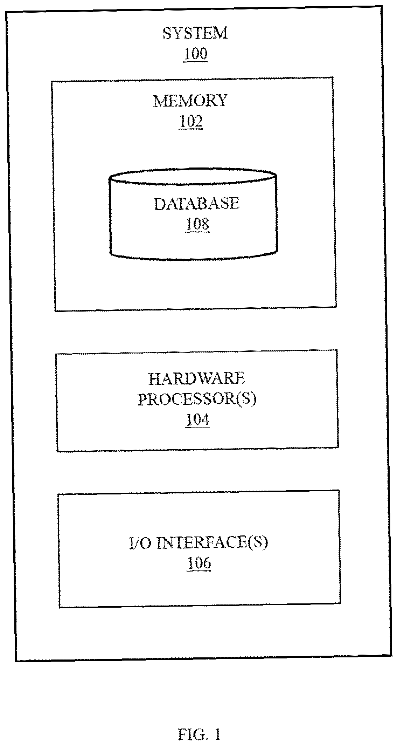

Referring now to the drawings, and more particularly to FIGS. 1, 2, and 4 to 6, where similar reference characters denote corresponding features consistently throughout the figures, there are shown preferred embodiments, and these embodiments are described in the context of the following exemplary system and/or method.

FIG. 1 illustrates an exemplary block diagram of a system for task anticipation by integrating large language models and classical planning, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

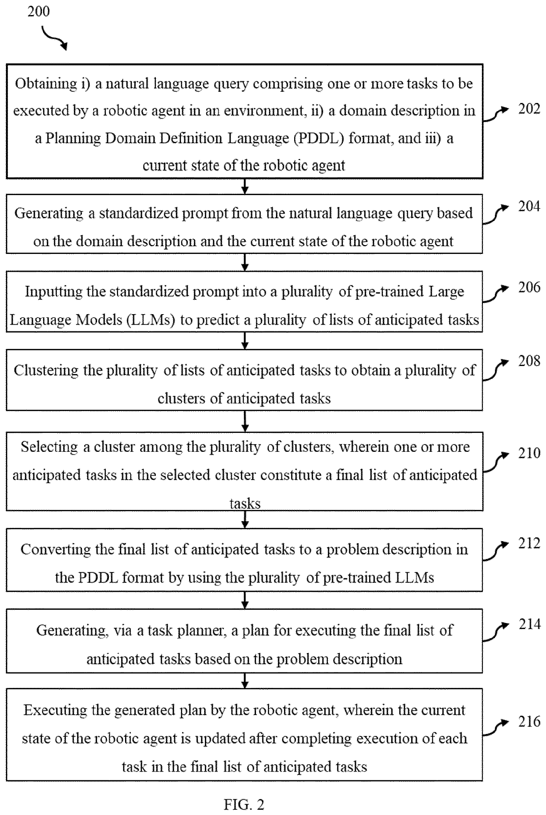

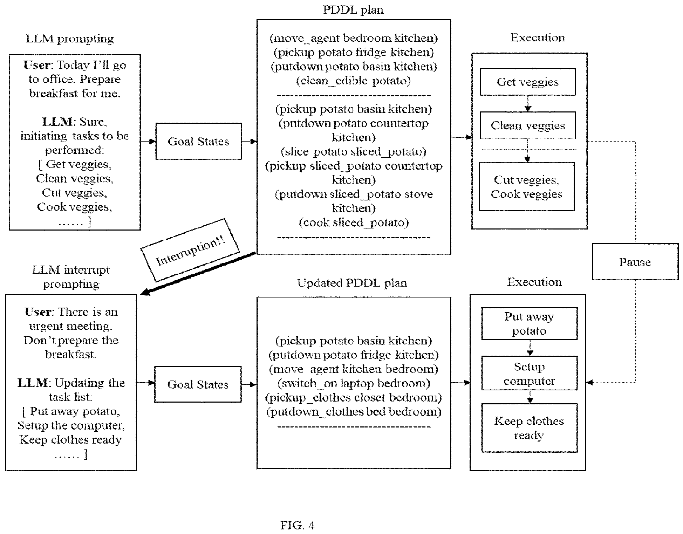

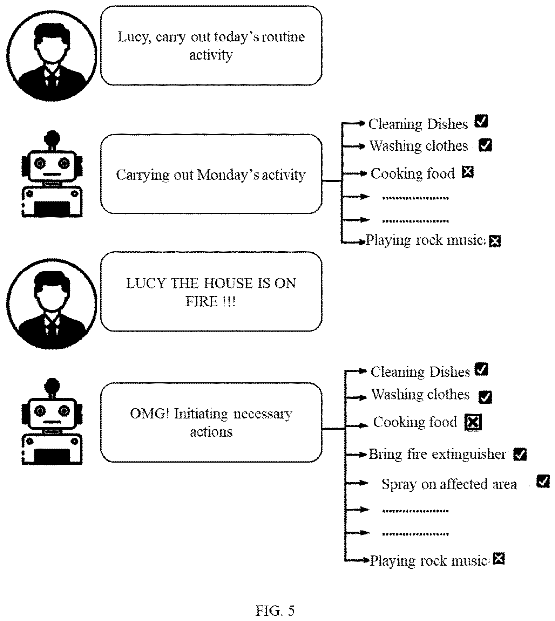

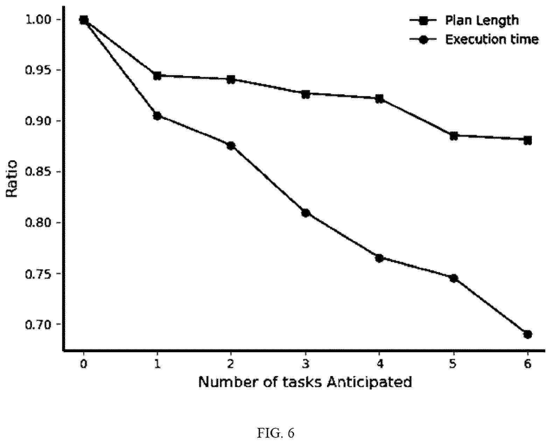

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagram depicted in FIG. 2, examples illustrated in FIGS. 4 and 5 and experimental results illustrated in FIG. 6 for task anticipation by integrating large language models and classical planning.

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, the steps of flow diagrams as depicted in FIG. 2, examples illustrated in FIGS. 4 and 5 and experimental results illustrated in FIG. 6. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

FIG. 2 is a flow diagram illustrating a method 200 for task anticipation by integrating large language models and classical planning, according to some embodiments of the present disclosure. At step 202 of the method 200, the one or more hardware processors 104 are configured to obtain i) a natural language query comprising one or more tasks to be executed by a robotic agent (alternately referred and used interchangeably as robot, agent, and the like) in an environment, ii) a domain description in a Planning Domain Definition Language (PDDL) format, and iii) a current state of the robotic agent. The natural language query is an instruction from a user to the robotic agent to perform the one or more tasks. In an embodiment, the natural language query is obtained as a text input. In another embodiment, the natural language query is obtained in audio format which is then converted to text by standard speech to text conversion techniques. For example, the natural language query is "Today I will go to the office, please prepare breakfast for me". Along with the natural language query, the domain description in PDDL format (domain.pddl file) is obtained which comprises prior knowledge of the environment and the robotic agent.

The prior knowledge of the environment in the domain description comprises: i) one or more locations in the environment, ii) one or more objects in the environment, iii) one or more states of the environment including a plurality of observed states at one or more previous timestamps, iv) information on one or more entities, attributes, and associated relationships in the environment. The prior knowledge of the robotic agent comprises: i) capability of the robotic agent in terms of associated sensors and actuators, and ii) specification of one or more actions the robotic agent is capable of executing. The specification of each of the one or more actions is represented in terms of one or more parameters, one or more preconditions which has to be satisfied in order to execute the action, one or more effects, one or more post conditions indicating state of the environment after execution of the one or more actions, cost of executing the one or more actions, and one or more routines comprising one or more sub-actions performed to execute the one or more actions.

The domain description $D = < S, H >$ is specified in the form of a signature $S$ and a theory $H$ of actions governing the domain dynamics. The signature includes a specification of types such as location, object, receptacle and agent; and constants such as kitchen and garden that are specific instances of the types; and predicates that include fluents, statics, and actions. As understood by a person skilled in the art fluents such as (agent_at ?l - location), (obj_at ?o - obj ?l - location), and (dropped ?o1 - obj ?r - receptacle ?l - location) represent domain attributes whose values can change over time as a result of actions, statics that are domain attributes whose values do not change over time, and actions such as move agent, cook, serve, and pickup. An example part of domain description describing action of dusting an object o at some location l is as follow:

```
(: action dusting
: parameters (? o - obj ?l - location )
: precondition (and (In_hand DustMop)
                        (agent_at ?l)
                        (not (dusted ?o ?l )))
: effect (and (dusted ?o ?l) ( increase (total-cost) 10)))
```

Another example part of domain description describing action of picking up a food item o at some location l is as follows:

```
( : action PickUp;food
:parameters (?o - obj ?r - receptacle ?l - location)
:precondition (and (agent_at ?l)
        (stuff_at ?o ?r ?l)
        (not (In_hand ?o)))
:effect (and (In_hand ?o)
(not (stuff_at ?o ?r ?l))
(increase (total-cost) 5)))
```

In addition to the natural language query and the domain description, current state of the agent is also obtained. The current state of the robotic agent is represented in terms of the perceived state of the environment (alternately referred to as) world and is updated in the domain description in PDDL format when state change happens due to execution of a task/action, for example, when a door becomes closed from earlier state of being open.

Further, at step 204 of the method 200, the one or more hardware processors 104 are configured to generate a standardized prompt from the natural language query based on the domain description and the current state of the robotic agent. First, a list of actions and one or more routines associated with each action in the list of actions are extracted from the domain description. Then, the one or more tasks comprised in the natural language query are extracted. Finally, the standardized prompt is composed as a combination of the list of actions, the one or more routines associated with each action in the list of actions, the current state of the robotic agent, and the one or more tasks. In an embodiment, the one or more hardware processors 104 are configured to obtain an additional data comprising one or more of i) a contextual data and ii) a person specific data. The contextual data may include contextual information such as holiday, parties, and so on. The person specific data includes calendar and user activity data in an embodiment. In another embodiment, user preferences may be learnt through implicit interaction between the user and robotic agent (e.g., frequently executed tasks) or explicit feedback to the robotic agent. The additional data is composed in the standardized prompt along with the remaining constituents of the standardized prompt.

Once the standardized prompt is generated, at step 206 of the method 200, the one or more hardware processors 104 are configured to input the generated standardized prompt into a plurality of pre-trained Large Language Models (LLMs) to predict a plurality of lists of anticipated tasks. The plurality of LLMs (for example GPT-3, PaLM etc.) are deep network architectures that are pre-trained with large volumes of text to process and predict text sequentially. The list of actions and one or more routines associated with each action in the prompt provides domain-specific knowledge to the plurality of pre-trained LLMs which enables them to predict only tasks that are executable in the given environment rather than arbitrarily predicting tasks which are not feasible in the given environment. Further, incorporating the additional data in the prompt enables prediction of one or more lists of one or more contextual and personalized anticipation tasks by the plurality of LLMs. The plurality of pre-trained LLMs have intrinsic problem of hallucination due to which they output responses that are either factually incorrect, nonsensical, or disconnected from the input prompt. Hence, at step 208, the one or more hardware processors 104 are configured to cluster the plurality of lists of anticipated tasks to obtain a plurality of clusters of anticipated tasks based on the similarity value of the task names at the semantic text space, using text matching algorithms like edit distance. Further, at step 210, the one or more hardware processors 104 are configured to select a cluster among the plurality of clusters, wherein one or more anticipated tasks in the selected cluster constitute a final list of anticipated tasks. At step 210, the cluster which has maximum number of similar LLM responses (i.e. the list of anticipated tasks) are selected. For example, task 1, 2 and 3 are common in multiple LLMs, and hence grouped into cluster 1. Task 4 and 5 belongs to cluster 2 say and tasks 6, 7, 8 are in separate clusters, say cluster 3, cluster 4 and cluster 5, respectively. The list in cluster 1 is selected and appended with the list in cluster 2. The rest of the clusters with only 1 task each are ignored. In case there is no common intersection amongst the LLM responses, then temperature value of the LLMs is tweaked to bring in a similarity by checking at what direction of tweaking the temperature values yield more similarity in responses. If still no common intersection is found, then the response with the highest confidence value is selected. This is done by keeping a table of successful task resolution with respect to each of the plurality of LLMs to rate their performance over time for this type of prompt task. In case of conflict with same weightage, the LLM's response with the newest version and recent release date is selected. This overcomes the hallucination problem to an acceptable level.

Once the final list of anticipated tasks is selected, at step 212 of the method 200, the one or more hardware processors are configured to convert the final list of anticipated tasks to a problem description in the PDDL format by using the plurality of pre-trained LLMs. The problem description $P = <O, I, G>$ describes a specific scenario under consideration (i.e., a scenario in which the anticipated tasks are executed for example, gardening or cooking) in terms of the set $O$ of specific objects, a description of the initial state i$I$ of the scenario in terms of the ground descriptions of the different fluent and statics, and a description $G$ of the goal state in terms of the relevant ground literals. As understood by a person skilled in the art, a fluent in a PDDL file is like a state variable/predicate, but its value is a number instead of true or false. A static is a type of predicate whose value does not change by any action. Thus, in a problem, the true and false instances of a static predicate will always be precisely those listed in the initial state specification of the problem definition.

An example description $I$ of the initial state is as follows:

```
(:init
 ;Initially
 (agent_at Bedroom)
 (switched_off faucet Kitchen)
 (switched_off Television Bedroom)
 (switched_off Morning_Radio Bedroom)
 (switched_off Light Bedroom)
 (switched_off Alarm Bedroom)
 (switched_off Burner Kitchen)
```

```
(switched_off Oven_switch Kitchen)
.....
```

An example goal state is as follows:

```
(:goal (and
(Awake)
(fruit_served Sliced_Apple Bedroom)
(food_served Cooked_cereal Bedroom)
(veggy_served Veggie Bedroom)
(served_drink Milk Bedroom)
(baked_served cake Bedroom)
(cleaned_food Remaining_food Bedroom)
(cleaned_food Remaining_fruit Bedroom)
(cleaned_food Remaining _veggy Bedroom)
(cleaned_food Remaining_baked Bedroom)
(CleanedHouse)
(dusted sofa livingRoom)
(laundry_done)
(watering_plants)
(cutting_done)
(Trash_cleared)
(movie_started)
))
```

Once the final list of anticipated tasks is converted to the problem description, at step 212 of the method 200, the one or more hardware processors are configured to generate a plan for executing the final list of anticipated tasks based on the problem description in such a way that an execution cost is minimized. The tasks in the final list of anticipated tasks may not be in a specific order, hence, in the step 212, they are ordered in a particular sequence ($\pi = (a_1,...,a_K)$) to generate a plan that takes the robotic agent from the current state $I$ to a state where G is satisfied. In an embodiment, a classing planner such as autotune version of the Fast Downward (FD) planner is used to compute plans. FD is a heuristic planner which adapts its parameters based on instances of the domain under consideration and supports different heuristics and options. The generated plan minimizes the execution cost of the robotic agent. The execution cost of the robotic agent is a weighted sum of a) an estimated time taken by the robotic agent to complete execution of the final list of anticipated tasks, b) a pre-defined priority value for each task in the final list of anticipated tasks, and c) an estimated amount of energy consumed by the robotic agent for executing the final list of anticipated tasks, wherein the estimated time taken and the estimated amount of energy consumed are learned by the robotic agent over a period of task executions.

At the initialization setting of the task planner, the components of the execution cost (time, priority value, energy consumption) are either predefined by a domain expert in the domain description or is obtained by prompting the LLM to get a cost. The LLM in such a case is provided a list of sample prompts and sample responses of tasks with associated costs as examples to output a cost for a given task that is in acceptable limits with respect to the already assigned costs. The output of the LLM may be added to the domain description. Once the domain description contains the cost for each sub-task, the system is ready to perform planning in a way to minimize overall cost for the sequence of sub-tasks to execute the high level tasks in the list of anticipated tasks. The sub-tasks are atomic in nature to make the cost assignment generalized for any high-level tasks. Once the robot begins executing one of the sub-tasks, the priority of the task could be updated based on the context and the urgency of associated sub-task in contrast to another task in the final list of anticipated tasks. However, the other 2 factors -- time to execute and energy consumed need to be updated correctly for optimal task planning in future. They are learned by the robotic agent in the following way: start time of each sub-task is noted and if the sub-task is executed completely, the end time is noted. Then, the average time of that atomic sub-task is updated over a sliding window of 'n' same sub-task executions over time ($t_i$, i = 1 to n) with the averaging formula, given by $(t_1 + t_2.... + t_n)/n$. In case of failures in sub-task execution, the cost is not updated with respect to the failed sub-tasks. Similarly for energy consumption, the level of battery of a robot is measured at the start of the sub-task and post task completion. The difference in these battery levels will give the cost for an instance. However, computing granular level energy consumption is infeasible for each instance of sub-task execution. Hence, this is done by making the robot perform that sub-task repeatedly to get an initialization of the energy cost, and the cost is calculated as the energy consumed in several attempts, divided by the number of attempts of the same task. Only successful attempts of the sub-task are considered for calculation. The execution cost is calculated according to equation 1, wherein $p$ denotes the priority of task in the range 0 to 1, $e_i$ denotes energy consumed at $i$th instance among $n$ instances, and $t_j$ denotes time taken to execute the sub-task at $j$th instance among $m$ instances. If $p = 0$, this means the sub-task is high priority and the cost can be ignored. If $p = 1$, this means the sub-task is low priority and task selection depends on energy and time taken for that sub-task. If $p = 0.5$, it means the sub-task is normal priority. For other values of $p$, the sub-task will have priorities in between the boundaries of low, normal, and high priority (i.e., in the range 0 to 1).

$$C = p \times \left[ \frac{w_1 \times (e_1 + e_2 + \cdots + e_i + \cdots + e_n)}{n} + \frac{w_2 \times (t_1 + t_2 + \cdots + t_j + \cdots + t_m)}{m} \right], \text{ such that } w_1 + w_2 = 1 \ (1)$$

In an embodiment, the execution cost is inserted in the PDDL problem description as a metric to minimize the overall cost: (:metric minimize (total-cost)). Each sub-task will have an associated cost mentioned in the domain description. The PDDL fast downward planner searches for a path plan among many paths with minimum cost using any state-of-the-art search algorithms like A*, heuristic search and the like. Following is an example description of a sub-task 'putting down food' with associated cost of execution.

```
:action PutDown;food
:parameters (?o - obj ?r - receptacle ?l - location)
:precondition (and(agent_at ?l)
(In_hand ?o))
:effect (and(not(In_hand ?o))
(stuff_at ?o ?r ?l)
(increase (total-cost) 0.8)))
```

Table 1 provides a comparison of an example plan generated without anticipation by conventional methods and plan generated by embodiments of present disclosure with anticipation. Each task is defined in the format <action> <start-location> <end location> or <action> <object> <end location>. For example, in the first task 'move bedroom pantry', action is move, start location is bedroom and end location is pantry. In the second task 'pickup lawnmower pantry', action is pickup, object is lawnmower, and end location is pantry. In the example plan mentioned in table 1, the robot is first instructed to cut grass and then was given an instruction to water plants. The plan generated according to conventional methods without anticipation (given in left column) executes these tasks separately which requires the robot to go to pantry twice - once to pick up lawnmower and once again to pick up watering hose. However, by method 200, the robot was able to anticipate that after the 'cut grass' instruction, the 'water plant' instruction will come and hence planned accordingly - specifically picking up water hose from pantry when the robot visited pantry to pick up lawnmower. Thus, due to anticipation, the robot was able to complete the tasks with lesser number of movements due to which execution cost is also lesser than in conventional methods.

Table 1

| Without anticipation | With anticipation |
|---|---|
| - - - - - - - - - - - - - - - - - - - - - - - - - - | - - - - - - - - - - - - - - - - - - - - - - - - - - |
| (move bedroom pantry) | (move bedroom pantry) |
| *(pickup lawnmower pantry)* | *(pickup lawnmower pantry)* |
| (move pantry garden) | **(pickup watering_hose pantry)** |
| *(putdown lawnmower garden)* | (move pantry garden) |
| *(switch_on lawmmower garden)* | *(putdown lawnmower garden)* |
| *(cutting_the_grass)* | **(putdown watering_hose garden)** |
| - - - - - - - - - - - - - - - - - - - - - - - - - - | *(switch_on lawnmower garden)* |
| (move garden pantry) | *(cutting_the_grass)* |
| **(pickup watering_hose pantry)** | **(switch_on watering_hose garden)** |
| (move pantry garden) | **(pickup watering_hose garden)** |
| **(putdown watering_hose garden)** | **(water_the_plants )** |
| **(switch_on watering_hose garden)** | - - - - - - - - - - - - - - - - - - - - - - - - - - |
| **(pickup watering_hose garden)** | ; cost = 307 |
| **(water_ the_plants )** | ; plan length = 11 |
| - - - - - - - - - - - - - - - - - - - - - - - - - - | |
| ; cost 347 | |
| ; plan length = 13 | |

Once the plan is generated, at step 216 of the method 200, the one or more hardware processors are configured to execute the generated plan by the robotic agent. The current state of the robotic agent is updated after completing execution of each task in the final list of anticipated tasks. For every task in the domain description, there is a predefined set of instructions stored in the database 108 for executing the task. For example, for the task named 'PickUp food' in the domain description, there exists a mapped higher level task execution in the actual robot like 'PickUp Object' which has a set of instructions to enable the task execution in a robotic hardware framework like Robot Operating System (ROS). This task instruction gets further linked to the actual hardware of the robot via calls to the hardware level motor movements for that specific task. Since the final list of anticipated tasks are obtained by providing information from domain description to the LLMs, it contains only those tasks that are part of the domain description. This means that each and every task has a mapping set of instructions stored in the database 108 which is fetched according to the generated plan and executed by the robot.

If an interruption is encountered by the robotic agent while executing the generated plan, a new plan is generated using a set of anticipated tasks obtained by prompting the plurality of pre-trained LLMs with i) the domain description, ii) the current state of the robotic agent, and iii) a goal state of the robotic agent. The goal state is one of a plurality of goal states associated with a) a goal to serve the interruption, b) a goal to resume the task which was stopped due to the interruption, and c) a goal to reuse one or more executed tasks among the final list of anticipated tasks. The interruption is received by the robotic agent as a user instruction (natural language query) mentioning one or more tasks implicitly or explicitly. In an embodiment, the user instruction also includes the goal state specifying whether to serve the interruption, to resume the task which was stopped due to the interruption, or to reuse one or more executed tasks among the final list of anticipated tasks. The new plan is generated by prompting the plurality of LLMs with the current state of the robotic agent, the domain description, the goal state and the final list of anticipated tasks to get a list of interruption tasks. The difference between the anticipated task (alternatively referred as future task) and an interruption task is that the anticipated tasks can be complementary to currently executing tasks, whereas interruption tasks disrupt the currently executing task midway, which either need to be resumed later or foregone of completely. Once the interruption happens, based on interrupted task and currently executing task, a common task list gets generated that includes interruption task, future task and current task's recovery scheme. This is done by prompting the plurality of LLMs with the domain description, current state of the robotic agent and the environment, and goal state.

FIG. 5 illustrates a second example scenario of replanning when an interruption is encountered by the robotic agent while executing a plan, according to some embodiments of the present disclosure. Initially the user has instructed the robotic agent to carry out routine activities of that day. The robotic agent generates a plan and starts executing the tasks in the generated plan according to the method 200, wherein it obtains additional contextual and user specific data of that day (Monday in the given example) to generate a list of contextual and personalized anticipated tasks including cleaning dishes, washing clothes, cooking food, playing rock music and so on. After executing each of these tasks, the current state of the robotic agent is updated. Suppose when the robotic agent is cooking food, due to some accident, there was a fire in the house. The user interrupts the robotic agent by sending an instruction that the house is on fire. The robotic agent stops cooking food and generates a new plan which includes tasks such as bring fire extinguisher and spray on the affected area.

EXPERIMENTAL SETUP AND RESULTS

Experiments were conducted to evaluate the following hypotheses:

H1: LLMs are able to accurately anticipate future tasks based on a small number of prompts of task routines.
H2: LLMs can take into account specific contextual information for task anticipation.
H3: Considering anticipated tasks results in shorter plans and lower plan execution time than considering one task at a time as in conventional methods.
H4: Method 200 allows the agent to adapt to unexpected successes and failures by interrupting plan execution and replanning if necessary.

H1 is evaluated using different LLMs: PaLM, GPT-3.5 and GPT-4. For the other hypotheses GPT-4 is used as the default LLM unless stated otherwise. For H3, plans are computed using different configurations of the Fast-Downward system, and H4 is evaluated qualitatively.

A. Experimental Setup

Dataset: a custom dataset of high-level tasks in a household environment is created. These tasks belong to activities such as cooking, cleaning, washing, baking, gardening. Then a set of task routines $R_i$, each with $\approx 20$ tasks, are generated by sampling tasks across different activities while preserving the relative order of tasks within each activity. The custom dataset is defined in PDDL format and can be referred to as the domain description.

Prompting LLMs and Planning: Experiments were conducted under two configurations: with and without context configurations. In both configurations, the dataset is provided to the LLMs (in JSON format) to minimize hallucinations. In the without context configuration, two task routines were provided since the routine followed over two individual days. The LLM was then prompted to complete a partially specified routine for a day, with two tasks given. Following is an example prompt and LLM output for this experiment:

```
LLM Prompt
# List of tasks = { "task_id_1": "Cut the grass", 'task_id_2": "Vacuum the surfaces",
'task_id_3": "Bake a cake", ... }
# Consider the following routines:
routine_1 = ['Load dirty dishes' , 'Run the dishwasher', 'Collect cleaning supplies' ...]
routine_2 = ['Get vegetables from the fridge', 'Clean the vegetables', 'Cut the
vegetables', 'Cook vegetables on the stove', 'Serve food', 'Take out leftover food',...]
# Input:
Based on the following initial tasks, anticipate the future tasks for routine 3
routine_3_input = ['Get vegetables from the fridge', 'Clean the vegetables']

LLM Output
routine _3_output = ['Cut the vegetables', 'Cook vegetables on the stove', 'Serve food',
'Take out leftover food', .... ]
```

In the with context configuration, in addition to the two task routines (as before), one or more contextual examples are provided in form of the partially specified task inputs and the corresponding expected task outputs. The difference between the two configurations is thus the additional contextual prompting provided in the second configuration to guide the LLM toward providing contextual anticipated tasks as output.

Following measures were considered to evaluate task anticipation performance of the LLMs:

- Miss Ratio (Miss.): ratio of tasks not successfully anticipated to the total sampled sequences.
- Partial Ordering Count (POC): measures capability to maintain the relative order of tasks in the routines.
- Kendall rank correlation coefficient (KRCC): measures match between predicted and actual task order according to equation 2.

$$KRCC = \frac{n_c - n_d}{\sqrt{(n_0 - n_1)(n_0 - n_2)}} \ \ldots\ (1)$$

In equation 2, $n_c$ is number of concordant pairs of tasks in the list of anticipated tasks predicted by the LLMs, $n_d$ is the number of discordant pairs of tasks in the list of anticipated tasks predicted by the LLMs, $n_0 = n(n-1)/2$ is the total number of pairs of tasks in the list of anticipated tasks predicted by the LLMs, $n_1$ and $n_2$ are the sums of ties in the first and second sequences of sub-tasks. A pair of tasks $(\tau_1, \tau_2), (\tau_3, \tau_4)$ is said to be concordant if rank$(\tau_1)$ > rank$(\tau_3)$ and rank$(\tau_2)$ > rank$(\tau_4)$ or rank$(\tau_1)$ < rank$(\tau_3)$ and rank$(\tau_2)$ < rank$(\tau_4)$. If the ranks disagree, the pair is discordant. A tie can occur when there is a repetition of tasks in the anticipated routine, but since task repetitions are not considered in the current experiments, $n_2$ will always be zero. In an embodiment, the rank is a predefined value assigned to each task sequence based on matching with anticipated and actual task ordering.

To perform any task, the agent has to plan a sequence of finer-granularity actions. In current set of experiments, the number of such actions required to accomplish any given task varied from 1 to 16, with the initial domain description comprising 33 independent actions, 5 different rooms, 33 objects distributed over 5-10 types, and 19 receptacles. This is thus a complex domain for experimental analysis.

Baseline: As a baseline for evaluating the method 200, 100 routines of tasks are sampled and a probability transition matrix representing the likelihood of transitioning from one task to another is created within the dataset. The probability $P(\tau_j|\tau_i)$ of transitioning from a task $\tau_i$ to a task $\tau_j$ is given by equation 2, wherein *count*$(\tau_i, \tau_j)$ denotes the number of occurrences of the transition from task $\tau_i$ to a task $\tau_j$ in the dataset, *count*$(\tau_i)$ is total number of occurrences of the task $\tau_i$ in the dataset.

$$P\big(\tau_j\big|\tau_i\big) = \frac{count(\tau_i, \tau_j)}{count(\tau_i)} \ \ldots\ (2)$$

Once the probability transition matrix is determined, a Markov chain of the tasks is created such that given an initial task, subsequent tasks are obtained by repeatedly sampling from the probability transition matrix. For the planning experiments, the baseline was planning without considering any anticipated tasks.

RESULTS

Evaluating hypotheses H1 and H2: To evaluate H1, LLMs such as PaLM, GPT-3.5 and GPT-4 were used for anticipating future tasks based on previously seen routines. 500 experiments were run while sampling tasks from the household dataset, with the corresponding results summarized in table 2. It can be observed that even in the absence of the contextual examples, LLMs maintain the ordering of tasks in a routine. However, PaLM fails to anticipate all the tasks and misses ≈ 36% of the tasks sampled in the without context configuration. In the presence of contextual examples all three LLMs provided very good performance, with GPT-4 providing the correct task ordering 100% of the time and a very low Miss Ratio (0.06%). Thus, it can be concluded that the task anticipation performance of LLMs increases substantially with contextual examples. These results provide support for H1 and H2.

Table 2

| LLMs | Prompt without context | | | Prompt with context | | |
|---|---|---|---|---|---|---|
| | Miss Ratio | POC | KRCC | Miss Ratio | POC | KRCC |
| PaLM | 0.361 | 0.974 | 0.993 | 0.034 | 0.994 | 0.996 |
| GPT-3.5 | 0.282 | 0.676 | 0.906 | 0.0698 | 0.806 | 0.976 |
| GPT-4 | 0.037 | 0.960 | 0.995 | 0.0006 | 1.0 | 1.0 |

Next, experiments were conducted with GPT-4 under specific conditions in the household. Specifically, tasks from the dataset were arranged in a weekly schedule. After providing the LLM with the routine of tasks during each day of the week, a special prompt that deviated from the expected routine was posed to the LLM. An example of such a prompt is: "Today is Monday. I have an urgent meeting in the morning". It was observed that LLMs were able to respond to such prompts and respect the constraint imposed by the prompt while generating the anticipated tasks. For the specific prompt considered here, the LLM's output included most of the expected activities for Monday, while adding two extra tasks to set up a laptop and prepare clean clothes right after breakfast. These results further support H2. Next, the task anticipation ability of LLMs was compared (based on limited prompts) with the first-order Markovian baseline. For the baseline, the routine of tasks were generated based on the transition probability matrix of the baseline, with the results summarized in table 3. Since the baseline is based on a Markov chain, there is no way for the system to recover if it reaches a faulty state; it just continues to sample tasks from the faulty state. The deviation of the baseline from the correct routine (and the LLM's output) is shown by the values in the columns labeled 'Incorrect' and 'Repeat' in table 3. The baseline will need a large amount of data to capture the distribution of tasks from different activities. LLMs are able to learn preferences from limited prompts representing domain-specific preferences. These results further support H1.

Table 3

| | Miss Ratio | POC | KRCC | Incorrect | Repeat |
|---|---|---|---|---|---|
| GPT-4 | 0.0006 | 1.0 | 1.0 | 0 | 0 |
| Baseline (Markov chain) | 0.413 | 0.364 | 0.908 | 6.28 | 1.49 |

Evaluating hypothesis H3: To measure the impact of considering the anticipated tasks during planning, the cost of executing the sequences of finer granularity actions computed by the FD system was measured. Specifically, the LLM was prompted with contextual examples to provide different number of anticipated tasks for a partially specified routine. These anticipated tasks were considered as a joint goal by the planning system, with the resultant plan of actions being executed by the agent. Since the cost of the actions (in the domain description) was based on the execution time for current experiments, the total execution cost of a plan was taken as the execution time (in seconds) of the plan. This experiment was performed as a function of the number of anticipated tasks, which varied from 0 ("Myopic"), i.e., agent planning to perform 1 task at a time, to 6, i.e., with 6 tasks anticipated and considered jointly during planning. As the number of anticipated tasks increases, the search time limit provided to the planner was increased by units of 30 seconds. For example, when the agent jointly planned an action sequence for the current task and the next (anticipated) task, the search time limit was set to 60 seconds. The experiments were organized as paired trials with the initial conditions and the assigned set of tasks being the same in each paired trial across the different number of anticipated tasks. Each value reported in table 4 summarizing some of the results of these experiments is an average of 10 repetitions of the corresponding experiment. Table 4 shows the plan length and execution time provided by the FD system as the number of anticipated tasks changes from zero to three and six, under 3 configuration options supported by FD: seq-sat-fd-autotune-1, seq-sat-lama-2011, and seq-sat-fd-autotune-2. For each configuration, as the number of anticipated tasks increased, the plan length decreased. This indicates that anticipating and planning to jointly achieve multiple tasks results in a fewer number of actions being needed to complete these tasks. Similarly, the execution time decreased with increasing anticipation, suggesting that the agent became more efficient in performing tasks when it is able to interleave the corresponding actions. During these trials (experiments), it was noticed that the agent often had to use the available planning time limit to compute the plans, particularly when the task required it to sequence multiple actions and when multiple anticipated tasks had to be considered. As a result, the planning time reaches a plateau and does not change much across the different experiments whose results are summarized in table 4. These results support hypothesis H3.

Table 4

| Number of anticipated tasks → | | 0 (Myopic) | 3 (Method 200) | 6 (Method 200) |
|---|---|---|---|---|
| Planner | Parameters | | | |
| AT-1 | Plan length | 70.3 | 65.2 | 61.8 |
| | Execution time | 2051 | 1658 | 1390 |
| LAMA | Plan length | 65.7 | 62.5 | 61.2 |
| | Execution time | 1835 | 1613 | 1599 |
| AT-2 | Plan length | 67.2 | 64.3 | 60.2 |
| | Execution time | 1847 | 1591 | 1377 |

FIG. 6 is a graph illustrating a comparison of number of anticipated tasks versus ratio of execution time and plan length, according to some embodiments of the present disclosure. It further illustrates the results of the experiments for the seq-sat-fd-autotune-1 option. Since the initial state and set of tasks vary between each set of paired trials (experiments), averaging the numbers (e.g., for execution time) across these trials may not be meaningful. In each paired trial, the execution time and plan length of each instance that involved one or more anticipated tasks are expressed as a fraction of the corresponding execution time and plan length (respectively) obtained without any task anticipation (i.e., "myopic"). The average of these fractions over the 10 repetitions is shown in FIG. 6. It can be observed from the figure that there is a substantial ($\approx$ 31%) reduction in execution time and plan length ($\approx$ 12%) as the number of anticipated tasks increases to 6. Thus, it can be concluded that anticipating future tasks and considering them during planning leads to more efficient performance. These results further support H3.

Evaluating hypothesis H4: H4 is evaluated qualitatively by randomly interrupting the execution of a plan generated by a planner. Each interrupt was accompanied with a prompt by the user, leading to a change in the agent's operation. In particular, the state of the environment before the interrupt and the prompt (used for interrupting) were sent to the LLM to generate a new routine of tasks to be accomplished by the agent. While some actions may be irreversible, e.g., the pieces of a cut fruit cannot be put back together, the experiments demonstrate that combination of LLMs and action planning performed by the method 200 is able to undo the effects of some actions when that is appropriate. For example, in FIG. 4, action execution is interrupted by the prompt "There is an urgent meeting now. Don't prepare the breakfast". In this situation, the agent is able to plan suitable actions and put the vegetables back in their original location because it is no longer necessary to use them to cook a hot breakfast; the agent instead generates action sequences to setup the laptop and prepare suitable clothes for the meeting.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of task anticipation in robotic task planning and execution. Conventional methods for task anticipating use data-driven deep network architectures and Large Language Models (LLMs) for task estimation but they do so at the level of high-level tasks and require a large number of training examples. Thus, embodiments of present disclosure provide a method and system for task anticipation by integrating large language models and classical planning. The disclosed method and system leverages the generic knowledge of LLMs through a small number of prompts to perform high-level task anticipation, using the anticipated tasks as joint goals in a classical planning system to compute a sequence of finer granularity actions that jointly achieve these goals. The capabilities of the disclosed method and system were evaluated in a realistic simulated scenarios in a VirtualHome environment. The experimental results demonstrate a 31% reduction in the execution time in comparison with a conventional system that does not consider upcoming tasks.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

    obtaining (202), via one or more hardware processors, i) a natural language query comprising one or more tasks to be executed by a robotic agent in an environment, ii) a domain description in a Planning Domain Definition Language (PDDL) format, and iii) a current state of the robotic agent;
    generating (204), via the one or more hardware processors, a standardized prompt from the natural language query based on the domain description and the current state of the robotic agent;
    inputting (206), via the one or more hardware processors, the generated standardized prompt into a plurality of pre-trained Large Language Models (LLMs) to predict a plurality of lists of anticipated tasks;
    clustering (208), via the one or more hardware processors, the plurality of lists of anticipated tasks to obtain a plurality of clusters of anticipated tasks;
    selecting (210), via the one or more hardware processors, a cluster among the plurality of clusters, wherein one or more anticipated tasks in the selected cluster constitute a final list of anticipated tasks;
    converting (212), via the one or more hardware processors, the final list of anticipated tasks to a problem description in the PDDL format by using the plurality of pre-trained LLMs;
    generating (214), via a task planner executed by the one or more hardware processors, a plan for executing the final list of anticipated tasks based on the problem description, wherein the generated plan minimizes an execution cost of the robotic agent; and
    executing (216), via the one or more hardware processors, the generated plan by the robotic agent, wherein the current state of the robotic agent is updated after completing execution of each task in the final list of anticipated tasks.

EP 4 645 166 A1

2. The method as claimed in claim 1, wherein the domain description comprises prior knowledge of the environment and the robotic agent,

wherein the prior knowledge of the environment comprises: i) one or more locations in the environment, ii) one or more objects in the environment, iii) one or more states of the environment including a plurality of observed states at one or more previous timestamps, iv) information on one or more entities, attributes, and associated relationships in the environment,
wherein the prior knowledge of the robotic agent comprises: i) capability of the robotic agent in terms of associated sensors and actuators, and ii) specification of one or more actions the robotic agent is capable of executing, and wherein, the specification of each of the one or more actions is represented in terms of one or more parameters, one or more preconditions, one or more effects, one or more post conditions indicating state of the environment after execution of the one or more actions, cost of executing the one or more actions, and one or more routines comprising one or more sub-actions performed to execute the one or more actions.

3. The method as claimed in claim 1, wherein generating the standardized prompt from the natural language query based on the domain description and the current state of the robotic agent comprises:

extracting a list of actions from the domain description;
extracting one or more routines associated with each action in the list of actions from the domain description;
extracting the one or more tasks comprised in the natural language query; and
composing the standardized prompt as a combination of the list of actions, the one or more routines associated with each action in the list of actions, the current state of the robotic agent, and the one or more tasks.

4. The method as claimed in claim 1, comprising:

obtaining an additional data comprising one or more of i) a contextual data and ii) a person specific data; and
utilizing the additional data to generate the standardized prompt to enable prediction of one or more lists of one or more contextual and personalized anticipation tasks by the plurality of LLMs.

5. The method as claimed in claim 1, wherein the execution cost of the robotic agent is a weighted sum of a) an estimated time taken by the robotic agent to complete execution of the final list of anticipated tasks, b) a pre-defined priority value for each task in the final list of anticipated tasks, and c) an estimated amount of energy consumed by the robotic agent for executing the final list of anticipated tasks, wherein the estimated time taken and the estimated amount of energy consumed are learned by the robotic agent over a period of task executions, and wherein if an interruption is encountered by the robotic agent while executing the generated plan, a new plan is generated using a set of anticipated tasks obtained by prompting the plurality of pre-trained LLMs with i) the domain description, ii) the current state of the robotic agent, and iii) a goal state of the robotic agent, wherein the goal state is one of a plurality of goal states associated with a) a goal to serve the interruption, b) a goal to resume the task which was stopped due to the interruption, and c) a goal to reuse one or more executed tasks among the final list of anticipated tasks.

6. A system (100), comprising:

a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:

obtain i) a natural language query comprising one or more tasks to be executed by a robotic agent in an environment, ii) a domain description in a Planning Domain Definition Language (PDDL) format, and iii) a current state of the robotic agent;
generate a standardized prompt from the natural language query based on the domain description and the current state of the robotic agent;
input the generated standardized prompt into a plurality of pre-trained Large Language Models (LLMs) to predict a plurality of lists of anticipated tasks;
cluster the plurality of lists of anticipated tasks to obtain a plurality of clusters of anticipated tasks;
select a cluster among the plurality of clusters, wherein one or more anticipated tasks in the selected cluster constitute a final list of anticipated tasks;
convert the final list of anticipated tasks to a problem description in the PDDL format by using the plurality of

14

pre-trained LLMs;

generate, via a task planner, a plan for executing the final list of anticipated tasks based on the problem description, wherein the generated plan minimizes an execution cost of the robotic agent; and

execute the generated plan by the robotic agent, wherein the current state of the robotic agent is updated after completing execution of each task in the final list of anticipated tasks.

7.  The system as claimed in claim 6, wherein the domain description comprises prior knowledge of the environment and the robotic agent,

    wherein the prior knowledge of the environment comprises: i) one or more locations in the environment, ii) one or more objects in the environment, iii) one or more states of the environment including a plurality of observed states at one or more previous timestamps, iv) information on one or more entities, attributes, and associated relationships in the environment,

    wherein the prior knowledge of the robotic agent comprises: i) capability of the robotic agent in terms of associated sensors and actuators, and ii) specification of one or more actions the robotic agent is capable of executing, and wherein, the specification of each of the one or more actions is represented in terms of one or more parameters, one or more preconditions, one or more effects, one or more post conditions indicating state of the environment after execution of the one or more actions, cost of executing the one or more actions, and one or more routines comprising one or more sub-actions performed to execute the one or more actions.

8.  The system as claimed in claim 6, wherein the one or more hardware processors are configured to generate the standardized prompt from the natural language query based on the domain description and the current state of the robotic agent by:

    extracting a list of actions from the domain description;

    extracting one or more routines associated with each action in the list of actions from the domain description;

    extracting the one or more tasks comprised in the natural language query; and

    composing the standardized prompt as a combination of the list of actions, the one or more routines associated with each action in the list of actions, the current state of the robotic agent, and the one or more tasks.

9.  The system as claimed in claim 6, wherein the one or more hardware processors are configured to:

    obtain an additional data comprising one or more of i) a contextual data and ii) a person specific data; and

    utilize the additional data to generate the standardized prompt to enable prediction of one or more lists of one or more contextual and personalized anticipation tasks by the plurality of LLMs.

10. The system as claimed in claim 6, wherein the execution cost of the robotic agent is a weighted sum of a) an estimated time taken by the robotic agent to complete execution of the final list of anticipated tasks, b) a pre-defined priority value for each task in the final list of anticipated tasks, and c) an estimated amount of energy consumed by the robotic agent for executing the final list of anticipated tasks, wherein the estimated time taken and the estimated amount of energy consumed are learned by the robotic agent over a period of task executions, and wherein if an interruption is encountered by the robotic agent while executing the generated plan, a new plan is generated using a set of anticipated tasks obtained by prompting the plurality of pre-trained LLMs with i) the domain description, ii) the current state of the robotic agent, and iii) a goal state of the robotic agent, wherein the goal state is one of a plurality of goal states associated with a) a goal to serve the interruption, b) a goal to resume the task which was stopped due to the interruption, and c) a goal to reuse one or more executed tasks among the final list of anticipated tasks.

11. One or more non-transitory machine-readable information storage mediums comprising one or more instructions which when executed by one or more hardware processors cause:

    obtaining i) a natural language query comprising one or more tasks to be executed by a robotic agent in an environment, ii) a domain description in a Planning Domain Definition Language (PDDL) format, and iii) a current state of the robotic agent;

    generating a standardized prompt from the natural language query based on the domain description and the current state of the robotic agent;

    inputting the generated standardized prompt into a plurality of pre-trained Large Language Models (LLMs) to predict a plurality of lists of anticipated tasks;

    clustering the plurality of lists of anticipated tasks to obtain a plurality of clusters of anticipated tasks;

selecting a cluster among the plurality of clusters, wherein one or more anticipated tasks in the selected cluster constitute a final list of anticipated tasks;

converting the final list of anticipated tasks to a problem description in the PDDL format by using the plurality of pre-trained LLMs;

generating, via a task planner executed by the one or more hardware processors, a plan for executing the final list of anticipated tasks based on the problem description, wherein the generated plan minimizes an execution cost of the robotic agent; and

executing the generated plan by the robotic agent, wherein the current state of the robotic agent is updated after completing execution of each task in the final list of anticipated tasks.

12. The one or more non-transitory machine-readable information storage mediums as claimed in claim 11, wherein the domain description comprises prior knowledge of the environment and the robotic agent,

wherein the prior knowledge of the environment comprises: i) one or more locations in the environment, ii) one or more objects in the environment, iii) one or more states of the environment including a plurality of observed states at one or more previous timestamps, iv) information on one or more entities, attributes, and associated relationships in the environment,

wherein the prior knowledge of the robotic agent comprises: i) capability of the robotic agent in terms of associated sensors and actuators, and ii) specification of one or more actions the robotic agent is capable of executing, and wherein, the specification of each of the one or more actions is represented in terms of one or more parameters, one or more preconditions, one or more effects, one or more post conditions indicating state of the environment after execution of the one or more actions, cost of executing the one or more actions, and one or more routines comprising one or more sub-actions performed to execute the one or more actions.

13. The one or more non-transitory machine-readable information storage mediums as claimed in claim 11, wherein generating the standardized prompt from the natural language query based on the domain description and the current state of the robotic agent comprises:

extracting a list of actions from the domain description;

extracting one or more routines associated with each action in the list of actions from the domain description;

extracting the one or more tasks comprised in the natural language query; and

composing the standardized prompt as a combination of the list of actions, the one or more routines associated with each action in the list of actions, the current state of the robotic agent, and the one or more tasks.

14. The one or more non-transitory machine-readable information storage mediums as claimed in claim 11, wherein the one or more instructions which when executed by the one or more hardware processors further cause:

obtaining an additional data further comprising one or more of i) a contextual data and ii) a person specific data; and

utilizing the additional data to generate the standardized prompt to enable prediction of one or more lists of one or more contextual and personalized anticipation tasks by the plurality of LLMs.

15. The one or more non-transitory machine-readable information storage mediums as claimed in claim 11, wherein the execution cost of the robotic agent is a weighted sum of a) an estimated time taken by the robotic agent to complete execution of the final list of anticipated tasks, b) a pre-defined priority value for each task in the final list of anticipated tasks, and c) an estimated amount of energy consumed by the robotic agent for executing the final list of anticipated tasks, wherein the estimated time taken and the estimated amount of energy consumed are learned by the robotic agent over a period of task executions, and wherein if an interruption is encountered by the robotic agent while executing the generated plan, a new plan is generated using a set of anticipated tasks obtained by prompting the plurality of pre-trained LLMs with i) the domain description, ii) the current state of the robotic agent, and iii) a goal state of the robotic agent, wherein the goal state is one of a plurality of goal states associated with a) a goal to serve the interruption, b) a goal to resume the task which was stopped due to the interruption, and c) a goal to reuse one or more executed tasks among the final list of anticipated tasks.

SYSTEM
100

MEMORY
102

DATABASE
108

HARDWARE
PROCESSOR(S)
104

I/O INTERFACE(S)
106

FIG. 1

200

Obtaining i) a natural language query comprising one or more tasks to be executed by a robotic agent in an environment, ii) a domain description in a Planning Domain Definition Language (PDDL) format, and iii) a current state of the robotic agent — 202

Generating a standardized prompt from the natural language query based on the domain description and the current state of the robotic agent — 204

Inputting the standardized prompt into a plurality of pre-trained Large Language Models (LLMs) to predict a plurality of lists of anticipated tasks — 206

Clustering the plurality of lists of anticipated tasks to obtain a plurality of clusters of anticipated tasks — 208

Selecting a cluster among the plurality of clusters, wherein one or more anticipated tasks in the selected cluster constitute a final list of anticipated tasks — 210

Converting the final list of anticipated tasks to a problem description in the PDDL format by using the plurality of pre-trained LLMs — 212

Generating, via a task planner, a plan for executing the final list of anticipated tasks based on the problem description — 214

Executing the generated plan by the robotic agent, wherein the current state of the robotic agent is updated after completing execution of each task in the final list of anticipated tasks — 216

FIG. 2

FIG. 3A

FIG. 3B

LLM prompting

PDDL plan

Execution

User: Today I'll go to office. Prepare breakfast for me.

LLM: Sure, initiating tasks to be performed:
[ Get veggies,
Clean veggies,
Cut veggies,
Cook veggies,
...... ]

Goal States

(move_agent bedroom kitchen)
(pickup potato fridge kitchen)
(putdown potato basin kitchen)
(clean_edible potato)
-----------------------------------
(pickup potato basin kitchen)
(putdown potato countertop kitchen)
(slice potato sliced_potato)
(pickup sliced_potato countertop kitchen)
(putdown sliced_potato stove kitchen)
(cook sliced_potato)
-----------------------------------

Get veggies

Clean veggies

Cut veggies,
Cook veggies

Interruption!!

Pause

LLM interrupt prompting

Updated PDDL plan

Execution

User: There is an urgent meeting. Don't prepare the breakfast.

LLM: Updating the task list:
[ Put away potato,
Setup the computer,
Keep clothes ready
...... ]

Goal States

(pickup potato basin kitchen)
(putdown potato fridge kitchen)
(move_agent kitchen bedroom)
(switch_on laptop bedroom)
(pickup_clothes closet bedroom)
(putdown_clothes bed bedroom)
-----------------------------------

Put away potato

Setup computer

Keep clothes ready

FIG. 4

Lucy, carry out today's routine activity

Carrying out Monday's activity

Cleaning Dishes ☑
Washing clothes ☑
Cooking food ☒
........................
........................
Playing rock music ☒

LUCY THE HOUSE IS ON FIRE !!!

OMG! Initiating necessary actions

Cleaning Dishes ☑
Washing clothes ☑
Cooking food ☒
Bring fire extinguisher ☑
Spray on affected area ☑
........................
........................
Playing rock music ☒

FIG. 5

FIG. 6

# EUROPEAN SEARCH REPORT

**Application Number**

EP 25 16 6074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Arora Raghav ET AL: "Anticipate & Act : Integrating LLMs and Classical Planning for Efficient Task Execution in Household Environments", <br><br>, <br>1 January 2024 (2024-01-01), XP093298775, <br>DOI: 10.1109/ICRA57147.2024.10611164 <br>Retrieved from the Internet: <br>URL:https://openreview.net/forum?id=u8uz2G 8wzP <br>[retrieved on 2025-07-22] <br>* abstract * <br>* page 14038 - page 14043 * <br>----- | 1-15 | INV. <br>G06N3/045 |
| X | Birr Timo ET AL: "AutoGPT+P: Affordance-based Task Planning with Large Language Models", <br>arXiv.org, <br>16 February 2024 (2024-02-16), <br>XP093298922, <br>DOI: 10.48550/arxiv.2402.10778 <br>Retrieved from the Internet: <br>URL:https://arxiv.org/pdf/2402.10778v1 <br>[retrieved on 2025-07-22] <br>* abstract * <br>* page 1 - page 12 * <br>* page 14 - page 16 * <br>----- | 1-15 | |
| A | HAN-LIM CHOI ET AL: "Consensus-Based Decentralized Auctions for Robust Task Allocation", <br>IEEE TRANSACTIONS ON ROBOTICS, IEEE SERVICE CENTER, PISCATAWAY, NJ, US, <br>vol. 25, no. 4, 1 August 2009 (2009-08-01) <br>, pages 912-926, XP011269515, <br>ISSN: 1552-3098, DOI: <br>10.1109/TRO.2009.2022423 <br>* the whole document * <br>----- | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 23 July 2025 | Tsakonas, Athanasios |

**EP 4 645 166 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421035382